# EUROPÄISCHE PATENTSCHRIFT

(11) **EP 2 909 825 B1**
(45) Veröffentlichungstag und Bekanntmachung des Hinweises auf die Patenterteilung: **28.11.2018**
(21) Anmeldenummer: 13776792.7
(22) Anmeldetag: 11.10.2013
(51) Int. Cl.: G08C 17/00, H04Q 9/00, B23Q 1/00, B23Q 17/09, B24B 33/08, B24B 33/10

(54) **HONMASCHINE MIT KRAFTSENSOR UND TELEMETRISCHER SIGNAL- UND ENERGIEÜBERTRAGUNG**
HONING MACHINE COMPRISING A FORCE SENSOR AND TELEMETRY SIGNAL AND ENERGY TRANSMISSION
MACHINE À RODER AVEC CAPTEUR DE FORCE ET TRANSMISSION DE SIGNAL ET D'ÉNERGIE PAR TÉLÉMÉTRIE

(30) Priorität: 19.10.2012 DE 102012219099
(43) Veröffentlichungstag der Anmeldung: 26.08.2015
(73) Patentinhaber: KADIA Produktion GmbH + Co., 72622 Nürtingen (DE)
(72) Erfinder: REGLER, Roland, 91166 Georgensgmünd (DE)
(74) Vertreter: Patentanwälte Ruff, Wilhelm, Beier, Dauster & Partner mbB
(86) Internationale Anmeldenummer: PCT/EP2013/071371
(87) Internationale Veröffentlichungsnummer: WO 2014/060326

(56) Entgegenhaltungen:
- EP-A1- 0 575 657
- EP-A1- 2 116 324
- DE-A1- 3 537 172
- DE-A1- 10 343 682
- DE-A1-102009 059 131
- DE-C1- 4 312 411

## Beschreibung

### HINTERGRUND

Die Erfindung betrifft eine Honmaschine zum Honen rotationssymmetrischer Bohrungen in Werkstücken gemäß dem Oberbegriff von Anspruch 1.

Das Honen ist ein Zerspanungsverfahren mit geometrisch unbestimmten Schneiden, bei dem ein Honwerkzeug eine aus zwei Komponenten bestehende Schnittbewegung ausführt und eine ständige Flächenberührung zwischen einem oder mehreren Schneidstoffkörpern des Honwerkzeugs und der zu bearbeitenden Bohrungsinnenfläche vorliegt. Die Kinematik eines aufweitbaren Honwerkzeugs ist charakterisiert durch eine Überlagerung einer Drehbewegung, einer in Axialrichtung der Bohrung verlaufenden, oszillierenden Hubbewegung und einer Aufweitbewegung, die zu einer Veränderung des wirksamen Durchmessers des Honwerkzeugs führt. An der Bohrungsinnenfläche ergibt sich eine Oberflächenstruktur mit sich überkreuzenden Bearbeitungsspuren. Durch Honen endbearbeitete Oberflächen können extrem hohen Anforderungen bezüglich Maß- und Formtoleranzen genügen, so dass viele hoch belastete Gleitflächen in Motoren oder Motorbauteilen, z.B. Zylinderlaufflächen in Motorblöcken oder Bohrungsinnenflächen in Gehäusen von Einspritzpumpen, durch Honen bearbeitet werden.

Beim Honen werden die abrasiven Schneidstoffkörper mit einer Andrückkraft an die Bohrungsinnenfläche angedrückt. Die Andrückkraft ist neben der wirksamen Schnittgeschwindigkeit und der Art der Schneidstoffkörper ein wichtiger Bearbeitungsparameter zur maschinenseitigen Beeinflussung des Bearbeitungsergebnisses. Die Andrückkraft kann über die Aufweitung des Honwerkzeugs gesteuert werden.

Bei einigen Honverfahren besteht der Wunsch, die Andrückkraft möglichst genau einstellen zu können, damit die Honbearbeitung unter Berücksichtigung der Andrückkraft gesteuert werden kann. Es gibt bereits unterschiedliche Vorschläge, mit Hilfe eines an geeigneter Stelle angebrachten Kraftsensors ein zur Andrückkraft proportionales Sensorsignal zu erzeugen und dieses für die Steuerung des Honprozesses zu nutzen.

Aus der DE 35 37 172 C2 ist eine Honmaschine mit einer Vorrichtung zur Regelung des Arbeitsdrucks eines hydraulisch beaufschlagten Stellteils eines Honwerkzeugs bekannt. Das hydraulisch betätigte Stellteil wirkt dabei auf einen im Inneren des Honwerkzeugs angebrachten Aufweitkonus, der die Honleisten in radialer Richtung gegen das zu bearbeitende Werkstück zustellt. Die auf den Aufweitkonus ausgeübte Kraft wird mittels eines Kraftsensors gemessen. Der Arbeitsdruck der Hydraulikeinrichtung wird nach Maßgabe eines vorgegebenen Kraftverlaufs geregelt. Der Kraftsensor ist zwischen dem hydraulisch verstellbaren Stellteil und dem Aufweitkonus angeordnet, wobei zwischen dem Kraftsensor und dem hydraulischen Stellteil noch eine Feder zwischengeschaltet ist. Die Kraftmessung soll dadurch unabhängig von inneren Verlusten im hydraulischen System die Einstellung eines definierten Kraftverlaufs ermöglichen. Details zur Übertragung der Signale des Kraftsensors zur Steuerung sind nicht offenbart.

Die EP 0 575 657 A1 beschreibt Honverfahren, bei denen es unter anderem vorgesehen ist, die auf expandierbare Honleisten wirkende Zustellkraft während des Honprozesses ständig zu messen und als Signal einer Steuerung zuzuführen. In einer nur schematisch dargestellten Honmaschine ist eine an die Steuerung der Honmaschine angeschlossene Zustelleinrichtung vorgesehen, die über eine Kraftmessdose mit einem Honwerkzeug verbunden ist. Die Zustelleinrichtung hat eine motorisch in Achsrichtung bewegbare Gewindespindel, die über die Kraftmessdose direkt auf eine Zustellstange übertragen wird, welche in das Honwerkzeug eingreift. Die Messwerte der Kraftmessdose werden als Signal über eine Leitung der numerischen Steuerung der Honmaschine zugeführt. Details zur Übertragung der Signale zur Steuerung sind nicht offenbart.

In der DE 196 06 145 A1 wird eine Vorrichtung zur Aufweitung eines Honwerkzeugs mit zumindest einem zustellbaren Honbelag beschrieben, die einen Aufweitmechanismus zur Zustellung des Werkzeugs und eine Kraftmesseinheit zur Messung einer Zustellkraft des Aufweitmechanismus aufweist. Die Kraftmesseinheit ist an einem rotatorisch ruhenden Abschnitt des Aufweitmechanismus angeordnet. Dadurch kann auf eine aufwändige Übertragung der Signale der Kraftmesseinheit zwischen einem rotierenden Bauteil und einem rotatorisch ruhenden Abschnitt verzichtet werden. Außerdem können Nachteile bezüglich der Steifigkeit des Aufweitgestänges vermieden werden.

Die EP 2 000 258 A2 beschreibt ein Honverfahren, bei dem die Reaktionskräfte gemessen werden, die sich beim Andrücken der Honsteine an die Bohrungsinnenfläche einer zu bearbeitenden Bohrung ergeben. Die entsprechende Honmaschine hat im Honwerkzeug integrierte Sensoren zur Erfassung dieser Reaktionskraft. Bei einem Ausführungsbeispiel sind Sensoren zur Messung der Reaktionskraft zwischen den Honleisten und den die Honleisten tragenden Honleistenträgern angeordnet. Details zur Übertragung der Sensorsignale zur Steuerung sind nicht offenbart.

Die deutsche Patentanmeldung DE 10 2009 059 131 A1 beschreibt ein Verfahren zum spanenden Bearbeiten einer Oberfläche und ein Honwerkzeug zur Verwendung bei dem Verfahren. Das Honwerkzeug liegt über eine Führungsleiste an der Wandung einer zu bearbeitenden Zylinderbohrung an. An der der Führungsleiste gegenüberliegenden Wandung ist die eigentliche Honleiste angeordnet, welche über einen Zustellkonus von einem im Honwerkzeug angeordneten Piezoelement bewegt werden kann. Der momentane Zustand des Piezoelements wird über eine Kraftmessdose kontrolliert, welche die gemessenen Kräfte drahtlos an eine Telemetrieeinheit überträgt, welche über eine Stütze abgestützt ist.

### AUFGABE UND LÖSUNG

Der Erfindung liegt die Aufgabe zugrunde, eine Honmaschine bereitzustellen, mit der Honverfahren durchgeführt werden können, die eine Messung der Andrückkraft der Schneidstoffkörper bzw. einer dazu proportionalen Kraft erfordern. Dabei soll eine präzise Messung möglich sein, ohne die Konstruktion der Honmaschine oder des Honwerkzeugs unnötig zu verkomplizieren. Gegebenenfalls soll es möglich sein, das Kraftmesssystem so auszulegen, dass existierende Honmaschinen mit nur wenigen einfachen Handgriffen mit einem Kraftmesssystem nachgerüstet werden können.

Zur Lösung dieser Aufgabe stellt die Erfindung eine Honmaschine mit den Merkmalen von Anspruch 1 bereit. Vorteilhafte Weiterbildungen sind in den abhängigen Ansprüchen angegeben. Der Wortlaut sämtlicher Ansprüche wird zur Bezugnahme zum Inhalt der Beschreibung gemacht.

Gemäß der beanspruchten Erfindung wird diese Aufgabe bei einer gattungsgemäßen Honmaschine dadurch gelöst, dass der Kraftsensor im Bereich des werkzeugseitigen Endabschnitts der maschinenseitigen Aufweitstange angeordnet ist und über eine telemetrische Übertragungsstrecke mit der Steuereinrichtung der Honmaschine verbunden ist. Der Kraftsensor ist also an einem Element der Honmaschine angebracht und verbleibt dadurch auch bei einem Werkzeugwechsel an der Honmaschine. Somit ist es nicht nötig, Honwerkzeuge mit integriertem Kraftsensor zu verwenden, wodurch die Werkzeugkosten moderat bleiben. Andererseits führt die Anordnung im werkzeugseitigen Endabschnitt der Aufweitstange dazu, dass der Kraftsensor im Kraftfluss sehr nahe am Schneidbereich der Honwerkzeuganordnung sitzt, also nahe an demjenigen Bereich, in welchem die zu bestimmenden Andrückkraft bzw. die zugehörigen Reaktionskräfte wirken. Zwischen dem Kraftsensor und dem Eingriffsbereich der Schneidstoffkörpern an der Bohrungsinnenwand liegen in der Regel keine mit mechanischem Spiel behaftete Übergänge und auch keine aufgrund ihrer Konstruktion notwendigerweise elastisch nachgiebigen Bauelemente, so dass die am Ort des Kraftsensors auftretenden und gemessenen Kräfte für alle praktischen Zwecke als proportional zur Andrückkraft angesehen werden können.

Das Sensorsignal oder ein daraus abgeleitetes Signal wird über eine telemetrische Übertragungsstrecke an die Steuereinrichtung übertragen. Im Sinne dieser Anmeldung liegt eine telemetrische Übertragungsstrecke dann vor, wenn an mindestens einer Stelle der Übertragungsstrecke die Signalübertragung über einen gewissen Abstand berührungslos erfolgt, so dass ein Teil der Übertragungsstrecke nicht durch eine elektrisch leitende Kabelverbindung oder einen elektrischen Berührungskontakt gebildet wird. Es hat sich herausgestellt, dass hierdurch eine besonders störungsarme Signalübertragung möglich ist, was sich vorteilhaft auf die Präzision der Steuerung der Honmaschine auswirkt. Durch die Nutzung der Sensortelemetrie im Rahmen der Kraftmessung bei einer Honmaschine ist es auch möglich, ein entsprechendes Kraftmesssystem mit vergleichsweise geringem konstruktivem Aufwand in eine Honmaschine zu integrieren, wobei sich in vielen Fällen auch die Möglichkeit ergibt, ein präzise arbeitendes Kraftmesssystem in eine bereits fertige Honmaschine im Wege der Nachrüstung ohne großen Aufwand zu integrieren.

Bei bevorzugten Ausführungsformen weist die Übertragungsstrecke mindestens eine berührungslos arbeitende telemetrische Übertragereinheit auf, die an einem ersten Bauteil ein erstes Übertragerelement und an einem von dem ersten Bauteil gesonderten zweiten Bauteil ein zweites Übertragerelement aufweist, wobei das erste und das zweite Übertragerelement über einen zwischen den Bauteilen gebildeten Luftspalt in Übertragungskontakt stehen. Zwischen den beiden Übertragerelementen, die nicht in Berührungskontakt miteinander stehen, kann über den Luftspalt hinweg eine Signalübertragung im Nahfeldbereich erfolgen. Die Übertragerelemente können beispielsweise als induktive Übertrager oder kapazitive Übertrager ausgestaltet sein. Der Abstand zwischen den Übertragerelementen kann beispielsweise im Bereich unterhalb von 50 mm oder unterhalb von 10 mm liegen, insbesondere im Bereich zwischen 0,5 mm und 5 mm. Die Grenzen werden u.a. durch die Spezifikationen der verbauten Verstärker und Antennen bestimmt. Die telemetrische Übertragung im Nahfeldbereich bietet unter anderem den Vorteil, dass die korrespondierende Übertragerelemente bei der Montage des ersten und des zweiten Bauteils automatisch exakt zueinander positioniert werden können, so dass eine verlustarme kontaktlose Übertragung möglich ist. Gleichzeitig können das erste und das zweite Bauteil jederzeit voneinander getrennt werden, ohne dass für die Demontage der telemetrischen Übertragereinheit gesonderte Maßnahmen nötig sind.

Beispielsweise kann das erste Übertragerelement an einem ersten Bauteil angebracht sein, welches zur Honmaschine gehört, während das zweite Übertragerelement an einem Bauteil angeordnet sein kann, welches zur Honwerkzeuganordnung gehört, wobei dieses Bauteil z.B. ein Werkzeughalter der Honwerkzeuganordnung sein kann. Es ist auch möglich, dass eine telemetrische Übertragung zwischen zwei Bauteilen erfolgt, die beide zur Honmaschine gehören.

In der Übertragungsstrecke kann eine erste Übertragereinheit vorgesehen sein, die an der Aufweitstange ein erstes Übertragerelement und an der Honspindel oder einem drehfest mit der Honspindel verbundenen oder verbindbaren Bauteil ein zweites Übertragerelement aufweist, wobei das erste und das zweite Übertragerelement bei jeder im Betrieb vorkommenden axialen Relativstellung zwischen der Honspindel und der Aufweitstange in (berührungslosem) Übertragungskontakt stehen. Damit ist über den gesamten Verstellbereich der maschinenseitigen Aufweitstange eine zuverlässige Signalübertragung zur Honspindel oder einem drehfest mit der Honspindel verbundenen Bauteil sichergestellt.

Die erste Übertragereinheit hat bei manchen Ausführungsformen eine die Aufweitstange umschließende Ringantenne, deren axiale Länge vorzugsweise mindestens so groß ist wie der axiale Verstellbereich der Aufweitstange zwischen maximal eingefahrener und maximal ausgefahrener Position. Die Verwendung einer Ringantenne stellt sicher, dass der Übertragungskontakt unabhängig von der Drehstellung der Aufweitstange ist, die sich beim Zusammenbau der Aufweitstange bzw. der Honmaschine ergibt. Alternativ oder zusätzlich ist es ist auch möglich, das zweite Übertragerelement als eine Ringantenne auszubilden, die in Umfangsrichtung (um die Aufweitstange herum) geschlossen ist. Auch einfachere Antennen können verwendet werden, wobei dann beim Zusammenbau genauer auf deren exakte relative Positionierung zueinander zu achten wäre.

Vorzugsweise hat die Übertragungsstrecke eine zweite Übertragereinheit, die an der Honspindel oder einem drehfest mit der Honspindel verbundenen oder verbindbaren Bauteil ein erstes Übertragerelement (spindelfestes Übertragerelement) und an dem Spindelgehäuse oder einem drehfest mit dem Spindelgehäuse verbundenen oder verbindbaren Bauteil ein zweites Übertragerelement (gehäusefestes Übertragerelement) aufweist, wobei das erste und das zweite Übertragerelement bei jeder im Betrieb vorkommenden Drehstellung der Honspindel in Übertragungskontakt stehen. Eine solche zweite Übertragereinheit kann auch als Rotierübertrager bezeichnet werden.

Die Übertragung vom Spindelgehäuse oder dem drehfest mit dem Spindelgehäuse verbundenen Bauteil zur Steuereinrichtung kann leitungsgebunden erfolgen, wobei gegebenenfalls auch Schleifkontakte oder dergleichen genutzt werden können. Eine telemetrische Übertragung ist ebenfalls möglich, z.B. per Funk.

Die Übertragung zwischen den Übertragerelementen kann mit analoger oder digitaler Übertragungstechnik realisiert werden.

Besonders bei der Bearbeitung von Bohrungen mit relativ kleinen Durchmessern, beispielsweise im Durchmesserbereich von 15 mm oder weniger, kommen häufig Honwerkzeuganordnungen zum Einsatz, die ein Honwerkzeug mit einem rohrförmigen Werkzeugkörper haben, der mit einem Endabschnitt in einem Werkzeughalter befestigt ist und am gegenüberliegenden Endabschnitt einen radial aufweitbaren Schneidbereich hat. Im Schneidbereich kann mindestens eine radial zustellbare Honleiste angeordnet sein. Der Werkzeugkörper dient dann als Aufnahme für eine oder mehrere Honleisten und gleichzeitig als Führung für ein werkzeugseitiges Aufweitelement, das der radialen Zustellung der Honleisten dient. Der radial aufweitbare Schneidbereich kann auch als geschlitzte Hülse gestaltet sein, an deren Außenseite ein Schneidbelag als Honelement aufgebracht ist. Der Werkzeughalter dient einerseits zur Aufnahme des Werkzeugkörpers und andererseits zur Befestigung der Honwerkzeuganordnung an der Honspindel der Honmaschine.

Solche Werkzeughalter werden bei manchen Ausführungsformen drehfest und lösbar mit der Honspindel verbunden. Die Honspindel kann dazu eine entsprechende Werkzeugaufnahme aufweisen, beispielsweise eine Werkzeugaufnahme mit einem Innengewinde zum Einschrauben eines Werkzeughalters oder eine Werkzeugaufnahme mit einer konischen Spannfläche, in die ein Werkzeughalter mit einem korrespondierenden Spannkegel eingespannt wird. Vorzugsweise reicht der mit dem Kraftsensor versehene Endabschnitt der Aufweitstange bis in den Bereich der Werkzeugaufnahme hinein, so dass der Kraftsensor sich im Inneren des Werkzeughalters befindet, wenn der Werkzeughalter an der Honspindel befestigt ist.

Bei manchen Ausführungsformen führt die Übertragungsstrecke über den Werkzeughalter bzw. durch den Werkzeughalter, so dass die Übertragungsstrecke erst bei richtiger Montage des Werkzeughalters an der Honspindel geschlossen wird.

Der Werkzeughalter kann in einem Abschnitt, der der Aufweitstange zugewandt ist, das zweite Übertragerelement der ersten Übertragereinheit aufweisen, während in einem Abschnitt, der dem Spindelgehäuse oder einem mit dem Spindelgehäuse drehbar verbundenen Bauteil zugeordnet ist, ein erstes Übertragerelement der zweiten Übertragereinheit angeordnet ist. Somit kann die Übertragungsstrecke durch Einbau eines solchen Werkzeughalters komplettiert bzw. bei Ausbau eines entsprechendes Werkzeughalters unterbrochen werden, ohne dass für Herstellung der übertragenden Verbindung oder deren Auflösung bei Entnahme des Werkzeughalters gesonderte Montagearbeiten notwendig sind.

Die Leistungsversorgung des Kraftsensors kann leitungsgebunden beispielsweise durch die Aufweitstange hindurch erfolgen. Es ist auch möglich, an oder in der Aufweitstange eine Batterie oder ein Akkumulator für die Leistungsversorgung des Kraftsensors vorzusehen. Vorzugsweise erfolgt die Leistungsversorgung des Kraftsensors jedoch über die telemetrische Übertragungsstrecke ausgehend von einer externen elektrischen Leistungsversorgung. Hierzu können eine oder mehrere bidirektionale Übertragereinheiten vorgesehen sein, welche dazu konfiguriert sind, Signale vom Kraftsensor in Richtung der Steuereinheit und Energie für die elektrische Versorgung des Kraftsensors in Richtung des Kraftsensors zu übertragen. Die Energieübertragung über einen Luftspalt kann durch Induktion erfolgen.

Die Anordnung eines Kraftsensors am werkzeugseitigen Endabschnitt der Aufweitstange kann unabhängig von der telemetrischen Übertragung der zugehörigen Sensorsignale bei gattungsgemäßen Honmaschinen vorteilhaft sein, zum Beispiel in Verbindung mit einem oder mehreren Schleifkontakten zwischen gegeneinander beweglichen Übertragerelementen der Übertragungsstrecke.

Die telemetrische Übertragungsstrecke kann unabhängig von der Anordnung eines Kraftsensors am werkzeugseitigen Endabschnitt der Aufweitstange bei gattungsgemäßen Honmaschinen vorteilhaft sein. Die Sensortelemetrie kann z.B. in Verbindung mit einem Kraftsensor genutzt werden, der weiter entfernt vom werkzeugseitigen Ende der Aufweitstange oder im Honwerkzeug angeordnet ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im Folgenden näher erläutert.

### KURZBESCHREIBUNG DER ZEICHNUNGEN

- Fig. 1: zeigt Teile einer Ausführungsform einer erfindungsgemäßen Honmaschine im Bereich der Schnittstelle zwischen Honspindel und Honwerkzeuganordnung bei maximal eingefahrener Aufweitstange des Aufweitsystems; und
- Fig. 2: zeigt den Ausschnitt aus Fig. 1 bei maximal ausgefahrener Aufweitstange des Zustellsystems.

### DETAILLIERTE BESCHREIBUNG BEVORZUGTER AUSFÜHRUNGS

### FORMEN

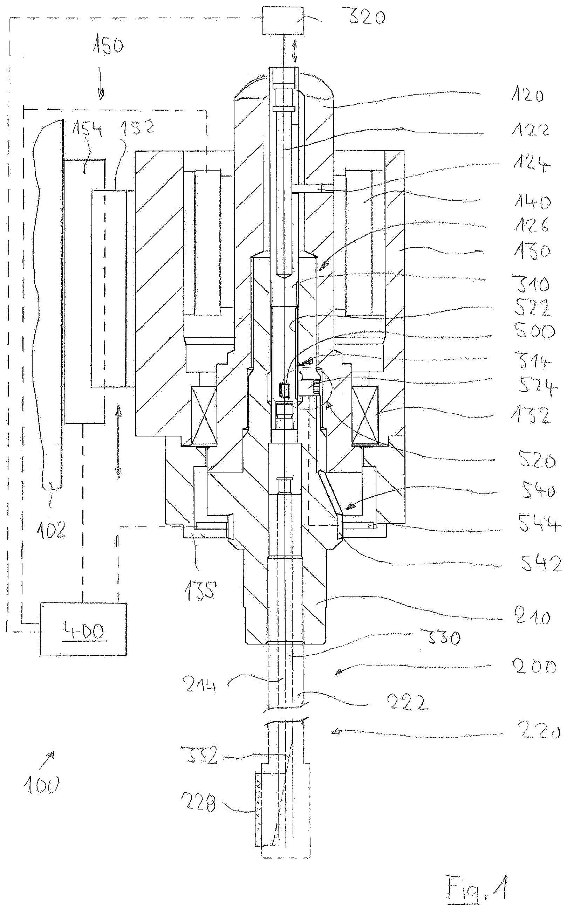

In Fig. 1 ist ausschnittsweise eine Ausführungsform einer Honmaschine 100 zum Honen rotationssymmetrischer Bohrungen in Werkstücken gezeigt. Die Honmaschine hat eine Honspindel 120, die mit vertikaler Spindelachse 122 im Inneren eines Spindelgehäuses 130 mittels mehrerer axial versetzter Drehlager 132 um die Spindelachse drehbar gelagert ist. Als Drehantrieb 140 für die Honspindel ist ein koaxial mit der Honspindel angeordneter Elektromotor vorgesehen, der in das Spindelgehäuse integriert ist und einen gehäusefesten Stator sowie einen an der Honspindel befestigten Rotor aufweist. Das Spindelgehäuse und die darin aufgenommene Honspindel können als Ganzes parallel zur Spindelachse, also in Vertikalrichtung, mittels eines Hubantriebs 150 oszillierend auf und ab bewegt werden. Das Spindelgehäuse 130 ist hierzu auf einem Laufschlitten 152 angeordnet, in den ein Sekundärteil eines elektrischen Linearmotors integriert ist. Der zugehörige Primärteil dieses linearen Direktantriebs ist in einem vertikalen Schlittenträger 154 integriert, der an einer Seite einer vertikalen Säule 102 befestigt ist, welche vom nicht gezeigten Maschinenbett der Honmaschine getragen wird. Für Details zu möglichen Ausgestaltungen dieser Antriebe wird auf die DE 102 25 514 B4 der Anmelderin verwiesen.

Fig. 1 zeigt den Abschnitt um das werkzeugseitige Ende der Honspindel. An diesem Ende sind Mittel zum Befestigen einer Honwerkzeuganordnung 200 vorgesehen. Das werkzeugseitige Ende der Honspindel ist hierzu in mehreren Stufen erweitert und bildet eine Werkzeugaufnahme 126 mit drei zylindrischen Abschnitten unterschiedlicher, zum freien Ende zunehmender Innendurchmesser. In diese Werkzeugaufnahme ist im betriebsfertig montierten Zustand der Honmaschine die Honwerkzeuganordnung 200 eingepasst, welche starr, drehfest und koaxial mit der Honspindel verbunden ist.

Bei anderen, nicht gezeigten Ausführungsformen ist eine konische Werkzeugaufnahme vorgesehen.

Die Honwerkzeuganordnung umfasst einen Werkzeughalter 210, der im betriebsfertig montierten Zustand mit der Honspindel koaxial mit dieser verschraubt ist. Hierzu sind nicht gezeigte Schrauben vorgesehen, die auf Teilkreisen um die Mittelachse angeordnet sind, so dass der Werkzeughalter über Planflächen mit der Werkzeugaufnahme verbunden werden kann. Weiterhin gehört zur Honwerkzeuganordnung ein von dem Werkzeughalter 210 getragenes Honwerkzeug 220, welches als Wechselteil auswechselbar im Werkzeughalter 210 aufgenommen ist. Das Honwerkzeug hat einen rohrförmigen Werkzeugkörper 222, der mit einem spindelseitigen Endabschnitt in einer entsprechend dimensionierten Aufnahmebohrung des Werkzeughalters 210 befestigt ist. Die Verbindung zwischen dem als Werkzeugspannfutter dienenden Werkzeughalter 210 und dem Werkzeugkörper 222 kann beispielsweise durch thermisches Einschrumpfen oder mechanisches Einspannen mittels Polygonspannfutter, Hydrodehnspannnfutter oder Spannhülse oder Spannzange realisiert sein, um eine Auswechslung des Werkzeugkörpers zu vereinfachen. Auch Klebeverbindungen sind möglich.

Am gegenüberliegenden freien Endabschnitt des Werkzeugkörpers befindet sich ein Schneidbereich, in dem sich mindestens eine radial zur Werkzeugachse 214 zustellbare Honleiste 228 befindet. Diese hat einen abrasiven Schneidstoffkörper mit gebundenen Schneidmittelkörnern.

Für die Zustellung der Honleiste 228 radial zur Werkzeugachse 214 ist ein elektromechanisches Aufweitsystem vorgesehen. Das Aufweitsystem umfasst eine maschinenseitige Aufweitstange 310, die im Inneren der als Hohlwelle ausgestalteten Honspindel 120 koaxial mit dieser angeordnet ist und mittels eines Aufweitantriebs 320 relativ zur Honspindel axial (d.h. parallel zur Spindelachse 122) in Richtung des Honwerkzeugs oder in Gegenrichtung verschiebbar ist. Die Aufweitstange ist mit Hilfe einer Drehmitnahme 124 gegenüber der Honspindel verdrehgesichert, und dreht sich bei Drehung der Honspindel mit gleicher Drehgeschwindigkeit mit dieser mit. Der in Fig. 1 nur schematisch gezeigte Aufweitantrieb 320 wird durch einen Elektromotor gebildet, der am oberen Ende des Spindelgehäuses koaxial zur Spindelachse befestigt ist (vergleiche DE 102 25 514 B4).

Ein werkzeugseitiger Endabschnitt 314 der Aufweitstange 310 ragt in das Innere der Werkzeugaufnahme 126 hinein und durchsetzt den mit Innengewinde versehenen Abschnitt vollständig. Im montierten Zustand der Anordnung aus Honspindel und Honwerkzeuganordnung ragt der Endabschnitt 314 weit in das Innere des Werkzeughalters 210 hinein.

Auf der Seite des Honwerkzeugs umfasst das Aufweitsystem ein werkzeugseitiges Aufweitelement 330, welches im Inneren des rohrförmigen Werkzeugkörpers axial verschiebbar in diesem geführt ist und an seinem spindelfernen Ende eine Schrägfläche 332 aufweist, die in Gleitkontakt mit einer korrespondierenden Schrägfläche an der Innenseite eines Honleistenträgers steht. Durch axiale Verschiebung des werkzeugseitigen Aufweitelements in Richtung des Werkzeuges kann somit die Honleiste 228 gegen die Kraft einer Rückstellfeder radial nach außen zugestellt werden. Eine Verstellbewegung in die Gegenrichtung führt zu einer Verringerung des wirksamen Durchmessers des Honwerkzeugs.

Das spindelseitige Ende des werkzeugseitigen Aufweitelements 330 hat einen Gewindezapfen mit einem Außengewinde, welcher zur Verbindung mit der maschinenseitigen Aufweitstange 310 in eine Gewindebohrung an der Stirnseite der Aufweitstange eingeschraubt wird. Hierdurch wird eine auf Zug und Druck beanspruchbare lösbare Verbindung zwischen der maschinenseitigen Aufweitstange und dem werkzeugseitigen Aufweitelement 330 des Aufweitsystems hergestellt.

Eine Steuereinrichtung 400 der Honmaschine dient zur Steuerung der Arbeitsbewegungen der Honspindel und des Aufweitsystems. Der Drehantrieb 140 und der Hubantrieb 150 für die Honspindel sowie der Aufweitantrieb 320 des Aufweitsystems sind an die Steuereinrichtung angeschlossen.

Die Honmaschine hat weiterhin ein Kraftmesssystem, das es erlaubt, an geeigneter Stelle innerhalb des Aufweitsystems auftretende Kräfte zu messen, die Rückschlüsse auf die Andrückkraft zulassen, mit der die abrasive Außenfläche der Honleiste während der Bearbeitung an die Innenseite der bearbeiteten Bohrung angedrückt wird. Das Kraftmesssystem umfasst einen Kraftsensor 500 zum Erzeugen eines zur Andrückkraft proportionalen elektrischen Sensorsignal sowie eine Übertragungsstrecke zur Übertragung des Sensorsignals oder eines daraus abgeleiteten Signals zu der Steuereinrichtung 400.

Der Kraftsensor 500 ist im Bereich des werkzeugseitigen Endabschnitts 314 der maschinenseitigen Aufweitstange in unmittelbarer Nähe der Anschlussstelle zum werkzeugseitigen Aufweitelement 330 angebracht. Der axiale Abstand zum werkzeugseitigen Aufweitelement beträgt weniger als das Fünffache, insbesondere weniger als das Doppelte des Durchmessers der Aufweitstange 310. Im betriebsfertig montierten Zustand der Honmaschine befindet sich der Kraftsensor tief innerhalb des Werkzeughalters 210 jenseits des in die Werkzeugaufnahme eingreifenden Gewindeabschnitts.

Der Kraftsensor ist dafür ausgelegt, die in diesem Bereich in Axialrichtung der massiven Aufweitstange wirkende Kraft zu messen. Der Kraftsensor kann beispielsweise einen oder mehrere Dehnungsmessstreifen (DMS) aufweisen, die am werkzeugseitigen Endabschnitt mittels unelastischem Kleber oder auf andere Weise befestigt sind und die elastische axiale Dehnung oder Stauchung des Endabschnitts erfassen können. Es ist auch möglich, dass der Kraftsensor ein oder mehrere piezoelektrische Elemente aufweist.

Der Kraftsensor 500 befindet sich an einer Stelle im Kraftfluss des Aufweitsystems, die sich in unmittelbarer Nähe des Aufweitelements 330 des Honwerkzeug befindet, aber dennoch an einem maschinenseitigen Element der Honmaschine, nämlich der maschinenseitigen Aufweitstange angebracht ist. Da zwischen den Schneidstoffkörpern am Honwerkzeug und dem Ort des Kraftsensors keine konstruktiv bedingte elastische Nachgiebigkeit vorgesehen ist, ist das vom Kraftsensor abgegebene Signal weitestgehend proportional zur Andrückkraft zwischen Schneidstoffkörper und Bohrungsinnenwand ist somit ein zuverlässiges Maß für diese Andruckkraft bzw. die zugehörige Reaktionskraft. Gleichzeitig ist der Kraftsensor jedoch an einem Bauteil (Aufweitstange) angebracht, welches zur Honmaschine gehört und beim Werkzeugwechsel an der Honmaschine verbleiben kann. Hierdurch ist es nicht nötig, einen Kraftsensor in das Honwerkzeug zu integrieren und entsprechende Einrichtungen zur Signalübertragung zwischen Honwerkzeug und Steuerung vorzusehen.

Die Übertragungsstrecke zur Übertragung von Signalen zwischen dem Kraftsensor 500 und der Steuereinrichtung 400 umfasst beim Ausführungsbeispiel zwei berührungslos arbeitende telemetrische Übertragereinheiten 520, 540 und führt unter Umgehung der Honspindel 120 und des Spindelgehäuses 130 über bzw. durch den Werkzeughalter 210 vom Kraftsensor 500 zur Steuereinrichtung 400.

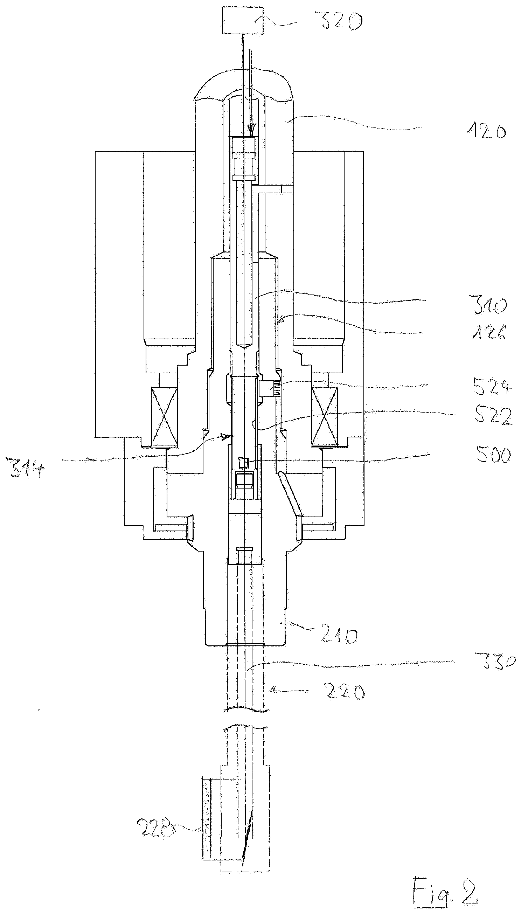

Eine induktive erste Übertragereinheit 520 hat auf Seiten der Aufweitstange ein erstes Übertragerelement 522 in Form einer axial langgestreckten Ringantenne, die die Aufweitstange umschließt und deren axiale Länge größer ist als der axiale Verstellbereich der Aufweitstange zwischen der maximal eingefahrenen Position (Fig. 1) und der maximal ausgefahrenen Position (Fig. 2). Die axiale Länge beträgt hier etwa das Dreifache bis Fünffache des Durchmessers der Aufweitstange. Zwischen dem Kraftsensor 500 und dem ersten Übertragerelement befindet sich ein zentrisch in der Aufweitstange befestigter Sensorsignalverstärker. Das korrespondierende zweite Übertragerelement 524 wird durch eine Antenne gebildet, die radial gegenüber der Ringantenne an der Innenseite des Werkzeughalters 210 so angebracht ist, dass zwischen den Übertragerelementen ein kleiner Luftspalt verbleibt. Aufgrund der axialen Länge der Ringantenne 522 liegt bei jeder axialen Stellung der Aufweitstange ein Übertragungskontakt zwischen den Übertragerelementen vor. Die erste Übertragereinheit wird hier auch als Axial-Übertragereinheit bezeichnet, weil sie unabhängig von der axialen Relativstellung von Aufweitstange und Werkzeughalter einen berührungslosen Übertragungskontakt sicherstellt.

Die zweite Übertragereinheit 540 ist als berührungslos arbeitender induktiver Rotierübertrager ausgelegt. Das erste Übertragerelement 542 der zweiten Übertragereinheit 540 befindet sich an der Außenseite eines zylindrischen Abschnitts des Werkzeughalters 210 und ist über eine elektrische Leitung an das zweite Übertragerelement 524 der ersten Übertragereinheit 520 angeschlossen. Radial gegenüberliegend befindet sich ein gehäusefest montiertes zweites Übertragerelement 544, das ebenfalls in Form einer in Umfangsrichtung geschlossene Ringantenne ausgelegt ist. Das zweite Übertragerelement ist an einen Gehäuseaufsatz 135 befestigt, welcher an die werkzeugseitige Stirnseite des Spindelgehäuses 130 angeschraubt ist und von diesem bei Bedarf leicht abgenommen werden kann.

Um die gesamte sensornahe Elektronik und die Einheiten der Übertragungsstrecke entsprechend den Umgebungsbedingungen anzupassen bzw. gegen Umgebungseinflüsse zu schützen, sind alle Elemente mittels Kunstharz oder dergleichen eingegossen und mit entsprechender Schutzart ausgeführt.

Das Kraftmesssystem hat einige vorteilhafte Besonderheiten. Der Kraftsensor 500 befindet sich im Kraftfluss des Aufweitsystems in unmittelbarer Nähe der Koppelstelle zwischen der maschinenseitigen Aufweitstange und dem werkzeuginternen Aufweitelement und kann sowohl Druckkräfte als auch Zugkräfte in Axialrichtung (parallel zur Spindelachse) erfassen. Dadurch, dass sich zwischen dem Kraftsensor und der Kontaktstelle zwischen den Schneidstoffkörpern und der Bohrungsinnenwand keine mit mechanischem Spiel behafteten Übergänge und keine in Kraftflussrichtung elastisch nachgiebigen Elemente befinden, sind die am Ort des Kraftsensors gemessenen axialen Kräfte für alle praktischen Zwecke proportional zur Andrückkraft bzw. den korrespondierend reaktiven Kräften, die vom Werkstück auf die dagegengedrückten Schneidstoffkörper ausgeübt werden. Somit ist ein unmittelbarer Zugriff auf die Andrückkraft und damit auch auf den maßgeblichen Schnittdruck möglich.

Das Sensorsignal wird in Richtung der Steuereinrichtung über eine Übertragungsstrecke übertragen, in deren Nähe sich keine elektrisch aktiven Bauteile befinden, die die Signalübertragung stören könnten. Insbesondere erfolgt die Signalübertragung nicht in Richtung und durch den Drehantrieb hindurch, sondern zunächst in die entgegen gesetzte Richtung, nämlich Richtung Honwerkzeug. Dadurch ist eine störungsfreie Signalübertragung gewährleistet.

Die beiden in die Übertragungsstrecke integrierten berührungslosen telemetrischen Übertragereinheiten 520, 540 sorgen dafür, dass die Signalübertragung beim Übergang zwischen relativ zueinander beweglichen Bauteilen (Aufweitstange und Werkzeughalter bzw. Werkzeughalter und gehäusefestes Teil 135) verschleißfrei arbeiten. Ein Wechsel einer aus Werkzeughalter und daran befestigtem Honwerkzeug bestehenden Honwerkzeuganordnung ist ohne Demontage von Komponenten des Kraftmesssystems möglich.

Beim Werkzeugwechsel wird bei der gezeigten Ausführungsform der Werkzeughalter 210 mit dem daran befestigten Werkzeugkörper 222 von der Honspindel abgeschraubt, nach unten entnommen und durch eine andere Honwerkzeuganordnung mit strukturell gleich aufgebautem Werkzeughalter ersetzt, der mittels Schrauben an die Honspindel angeschraubt wird. Sofern auch der neu eingewechselte Werkzeughalter entsprechende Übertragerelemente für die telemetrische Signalübertragung aufweist, wird beim Werkzeugwechsel auch die Übertragungsstrecke für die Signalübertragung wieder hergestellt. Es kann ohne Weiteres auch ein Werkzeughalter verwendet werden, der keine Übertragerelemente eines Kraftmesssystems hat. Die Honmaschine kann also mit und ohne Kraftmesssystem betrieben werden.

Im Übrigen sind die Komponenten des Kraftmesssystems so ausgelegt, dass viele herkömmliche Honmaschinen durch Anbau geeigneter Komponenten mit einem Kraftmesssystem nachgerüstet werden können. Eine konventionelle Honmaschine kann z.B. ein Spindelgehäuse der dargestellten Art haben, jedoch keinen stirnseitig angeschraubten Gehäuseaufsatz 135. Weiterhin sei zunächst zwar eine maschinenseitige Aufweitstange 310 vorgesehen, an deren Endabschnitt sei jedoch noch kein Kraftsensor mit angeschlossener erster Übertragereinheit angebracht.

Zum Nachrüsten eines Kraftmesssystems kann zunächst am werkzeugseitigen Endabschnitt der Aufweitstange ein Kraftsensor angebracht werden. Weiterhin wird eine längliche Ringantenne als erster Übertrager axial aufgeschoben und mit dem Sensorsignalverstärker des Kraftsensors elektrisch verbunden. Hierzu kann die Aufweitstange aus der Honspindel herausgeschraubt und danach wieder eingeschraubt werden. Da eine Ringantenne genutzt wird, kommt es nicht darauf an, in welcher Drehstellung sich die Aufweitstange befindet, wenn sie fest angeschraubt ist. Weiterhin wird an die Unterseite des Spindelgehäuses ein angepasster Gehäuseaufsatz mit Ringantenne 544 nach Art des Gehäuseaufsatzes 135 mittels Schrauben befestigt.

Alle übrigen Komponenten der Übertragungsstrecke befinden sich am Werkzeughalter, so dass die Übertragungsstrecke komplettiert wird, indem ein mit Übertragerelementen 524, 544 ausgestatteter Werkzeughalter in die Honspindel eingeschraubt wird.

Die Energieversorgung des Kraftsensors und der daran angeschlossenen Elektronik erfolgt bei dem Ausführungsbeispiel über die Übertragungsstrecke, mit der auch die Sensorsignale übertragen werden. Hierzu sind beide telemetrischen Übertragereinheiten 520, 540 als bidirektionale Übertragereinheiten ausgelegt, die es ermöglichen, Signale vom Kraftsensor in Richtung der Steuereinheit und Energie für die elektrische Versorgung des Kraftsensors und der daran angeschlossenen Elektronik von außen in Richtung des Kraftsensors zu übertragen. So können alle Elemente innerhalb der Übertragungsstrecke als passive Elemente ausgeführt werden. Hierdurch entfällt sämtlicher Wartungsaufwand in Bezug auf eine aktive Energieversorgung der Einzelelemente durch Batterien oder Akkumulatoren. Antennen, Sensoren etc. müssen nicht besonders aufeinander abgeglichen werden und sind somit im Servicefall problemlos austauschbar.

Bei der Ausführungsform ist somit eine telemetrische Kraftmessung in der Honspindel an der Aufweitstange realisiert.

Im Ausführungsbeispiel arbeiten alle telemetrischen Übertragereinheiten induktiv im Nahfeld, d.h. über relativ geringe Distanzen im Bereich von Millimetern oder wenigen Zentimetern. In gewissen Fällen wäre es auch möglich, eine telemetrische Übertragungsstrecke mit Einrichtungen zur Funkübertragung zwischen Kraftsensor und Auswerteeinheit vorzusehen. Hierdurch können gegebenenfalls größere Abstände zwischen den kooperierenden Übertragereinheiten realisiert werden, beispielsweise Abstände bis in die Größenordnung von einigen Meter oder mehr.

## Patentansprüche

1. Honmaschine (100) zum Honen rotationssymmetrischer Bohrungen in Werkstücken mit:
einer in einem Spindelgehäuse (130) beweglich gelagerten Honspindel (120), die mittels eines Drehantriebs (140) um eine Spindelachse (122) drehbar ist, mittels eines Hubantriebs (150) parallel zur Spindelachse oszillierend antreibar ist und an einem werkzeugseitigen Ende Mittel zum Befestigen einer Honwerkzeuganordnung (200) aufweist,
die einen Werkzeugkörper (220) aufweist, der mindestens ein Honelement trägt, welches durch axiale Verschiebung eines im Inneren des Werkzeugkörpers axial verschiebbaren werkzeugseitigen Aufweitelements (330) radial zu einer Werkzeugachse (214) zustellbar und mit einer Andrückkraft an eine Innenseite einer zu bearbeitenden Bohrung andrückbar ist;
einem Aufweitsystem mit einer im Inneren der Honspindel (120) geführten maschinenseitigen Aufweitstange (310), die mittels eines Aufweitantriebs (320) relativ zur Honspindel axial verschiebbar ist und einen werkzeugseitigen Endabschnitt (314) zum Ankoppeln an das werkzeugseitige Aufweitelement (330) aufweist;
einer Steuereinrichtung (400) zur Steuerung von Arbeitsbewegungen der Honspindel und des Aufweitsystems; und
einem Kraftmesssystem mit einem Kraftsensor (500) zum Erzeugen eines zur Andrückkraft proportionalen Sensorsignals und einer Übertragungsstrecke zur Übertragung des Sensorsignals oder eines daraus abgeleiteten Signals zu der Steuereinrichtung,
**dadurch gekennzeichnet,**
**dass** der Kraftsensor (500) im Bereich des werkzeugseitigen Endabschnitts (314) der maschinenseitigen Aufweitstange (310) angeordnet und über eine telemetrische Übertragungsstrecke mit der Steuereinrichtung verbunden ist.

2. Honmaschine nach Anspruch 1, **dadurch gekennzeichnet, dass** die Übertragungsstrecke mindestens eine berührungslos arbeitende telemetrische Übertragereinheit (520, 540) aufweist, die an einem ersten Bauteil ein erstes Übertragerelement (522, 542) und an einem von dem ersten Bauteil gesonderten zweiten Bauteil ein zweites Übertragerelement (524, 544) aufweist, wobei das erste und das zweite Übertragerelement über einen zwischen den Bauteilen gebildeten Luftspalt in Übertragungskontakt stehen, wobei vorzugsweise ein Abstand zwischen den Übertragerelementen im Bereich unterhalb von 50 mm, insbesondere im Bereich zwischen 0,5 mm und 5 mm liegt.

3. Honmaschine nach Anspruch 1 oder 2, **dadurch gekennzeichnet, dass** die Übertragungsstrecke eine erste Übertragereinheit (520) aufweist, die an der Aufweitstange (310) ein erstes Übertragerelement (522) und an der Honspindel oder einem drehfest mit der Honspindel verbundenen oder verbindbaren Bauteil (210) ein zweites Übertragerelement (524) aufweist, wobei das erste und das zweite Übertragelement bei jeder im Betrieb vorkommenden axialen Relativstellung der Honspindel und der Aufweitstange in Übertragungskontakt stehen.

4. Honmaschine nach Anspruch 3, **dadurch gekennzeichnet, dass** die erste Übertragereinheit eine die Aufweitstange umschließende Ringantenne (522) aufweist, deren axiale Länge vorzugsweise mindestens so groß ist wie ein axialer Verstellbereich der Aufweitstange zwischen einer maximal eingefahrenen und einer maximal ausgefahrenen Position.

5. Honmaschine nach einem der Ansprüche 2 bis 4, **dadurch gekennzeichnet, dass** das erste Übertragerelement (522) an einem ersten Bauteil (310) angebracht ist, welches zur Honmaschine gehört, während das zweite Übertragerelement (524) an einem Bauteil angeordnet ist, welches zur Honwerkzeuganordnung (210) gehört, wobei das zweite Bauteil vorzugsweise ein Werkzeughalter (210) der Honwerkzeuganordnung ist.

6. Honmaschine nach einem der vorhergehenden Ansprüche, **dadurch gekennzeichnet, dass** die Übertragungsstrecke eine zweite Übertragereinheit (540) aufweist, die an der Honspindel oder einem drehfest mit der Honspindel verbundenen oder verbindbaren Bauteil (210) ein erstes Übertragerelement (542) und an dem Spindelgehäuse oder einem drehfest mit dem Spindelgehäuse verbundenen oder verbindbaren Bauteil (135) ein zweites Übertragerelement (544) aufweist, wobei das erste und das zweite Übertragelement bei jeder im Betrieb vorkommenden Drehstellung der Honspindel in Übertragungskontakt stehen.

7. Honmaschine nach Anspruch 6, **dadurch gekennzeichnet, dass** das drehfest mit der Honspindel verbindbare Bauteil (210) ein Werkzeughalter (210) der Honwerkzeuganordnung ist und/oder dass das drehfest mit dem Spindelgehäuse verbindbare Bauteil ein vom Spindelgehäuse (130) lösbarer Gehäuseaufsatz (135) ist.

8. Honmaschine nach einem der vorhergehenden Ansprüche, **dadurch gekennzeichnet, dass** die telemetrische Übertragungsstrecke mindestens bidirektionale Übertragereinheit (520, 540) aufweist, welche dazu konfiguriert ist, Signale vom Kraftsensor (500) in Richtung der Steuereinheit (400) und Energie für die elektrische Versorgung des Kraftsensors in Richtung des Kraftsensors zu übertragen.

9. Honmaschine nach einem der vorhergehenden Ansprüche, **dadurch gekennzeichnet, dass** die Honspindel (120) eine Werkzeugaufnahme (126) zur Aufnahme eines Werkzeughalters (210) der Honwerkzeuganordnung aufweist, wobei der mit dem Kraftsensor (500) versehene Endabschnitt (314) der Aufweitstange bis in den Bereich der Werkzeugaufnahme derart hineinreicht, dass der Kraftsensor sich im Inneren des Werkzeughalters befindet, wenn der Werkzeughalter an der Honspindel befestigt ist.

## Claims

1. Honing machine (100) for honing rotationally symmetrical bore holes in workpieces, comprising:
a honing spindle (120), which is movably mounted in a spindle housing (130), is rotatable about a spindle axis (122) by means of a rotary drive (140), can be driven in an oscillating manner parallel to the spindle axis by means of a lifting drive (150) and has at a tool-side end means for securing a honing tool arrangement (200),
which has a tool body (220) carrying at least one honing element, which by axial displacement of a tool-side expanding element (330) that is axially displaceable inside the tool body can be infed radially in relation to a tool axis (214) and can be pressed by a pressing force against an inner side of a bore hole to be machined;
an expanding system with a machine-side expanding rod (310), which is guided inside the honing spindle (120), is axially displaceable by means of an expanding drive (320) in relation to the honing spindle and has a tool-side end portion (314), for coupling onto the tool-side expanding element (330);
a control device (400) for controlling operating movements of the honing spindle and the expanding system; and
a force measuring system with a force sensor (500) for generating a sensor signal proportional to the pressing force and a transmission path for transmitting the sensor signal or a signal derived therefrom to the control device,
**characterized in that**
the force sensor (500) is arranged in the region of the tool-side end portion (314) of the machine-side expanding rod (310) and is connected to the control device by way of a telemetric transmission path.

2. Honing machine according to claim 1, **characterized in that** the transmission path has at least one physically contactlessly operating telemetric transformer unit (520, 540), which has a first transformer element (522, 542) on a first component and a second transformer element (524, 544) on a second component that is separate from the first component, the first and second transformer elements being in transmission contact by way of an air gap that is formed between the components, a distance between the transformer elements preferably lying in the range below 50 mm, in particular in the range between 0.5 mm and 5 mm.

3. Honing machine according to claim 1 or 2, **characterized in that** the transmission path has a first transformer unit (520), which has a first transformer element (522) on the expanding rod (310) and a second transformer element (524) on the honing spindle or a component (210) that is connected or can be connected to the honing spindle for rotation therewith, the first and second transformer elements being in transmission contact in every axial relative position of the honing spindle and the expanding rod that occurs during operation.

4. Honing machine according to claim 3, **characterized in that** the first transformer unit has a circular antenna (522), which encloses the expanding rod and the axial length of which is preferably at least as great as an axial range of adjustment of the expanding rod between a fully retracted position and a fully extended position.

5. Honing machine according to any of claims 2 to 4, **characterized in that** the first transformer element (522) is provided on a first component (310) that belongs to the honing machine, while the second transformer element (524) is arranged on a component that belongs to the honing tool arrangement (210), the second component preferably being a tool holder (210) of the honing tool arrangement.

6. Honing machine according to any of the preceding claims, **characterized in that** the transmission path has a second transformer unit (540), which has a first transformer element (542) on the honing spindle or a component (210) that is connected or can be connected to the honing spindle for rotation therewith and a second transformer element (544) on the spindle housing or a component (135) that is connected or can be connected to the spindle housing for rotation therewith, the first and second transformer elements being in transmission contact in every rotational position of the honing spindle that occurs during operation.

7. Honing machine according to claim 6, **characterized in that** the component (210) that can be connected to the honing spindle for rotation therewith is a tool holder (210) of the honing tool arrangement and/or **in that** the component that can be connected to the spindle housing for rotation therewith is a housing base (135) that can be detached from the spindle housing (130).

8. Honing machine according to any of the preceding claims, **characterized in that** the telemetric transmission path has at least bidirectional transformer unit (520, 540), configured in such a way as to transmit signals from the force sensor (500) in the direction of the control unit (400) and energy for supplying electrical power to the force sensor in the direction of the force sensor.

9. Honing machine according to any of the preceding claims, **characterized in that** the honing spindle (120) has a tool receptacle (126) for receiving a tool holder (210) of the honing tool arrangement, the end portion (314) of the expanding rod that is provided with the force sensor (500) reaching into the region of the tool receptacle in such a way that the force sensor is located inside the tool holder when the tool holder is secured to the honing spindle.

## Revendications

1. Machine à roder (100) destinée à roder des alésages à symétrie de rotation dans des pièces, comprenant :
une broche à roder (120) montée mobile dans un boîtier de broche (130), laquelle peut être mise en rotation autour d'un axe de broche (122) au moyen d'un entraînement rotatif (140), peut être entraînée en oscillation parallèlement à l'axe de broche au moyen d'un entraînement en excursion (150) et possède, à une extrémité côté outil, des moyens servant à la fixation d'un arrangement d'outil de rodage (200),
laquelle possède un corps d'outil (220) qui porte au moins un élément de rodage, lequel peut être approché dans le sens radial d'un axe d'outil (214) par décalage axial d'un élément élargisseur (330) côté outil qui peut être décalé axialement à l'intérieur du corps d'outil et peut être poussé avec une force de pressage contre un côté intérieur d'un alésage à usiner ;
un système élargisseur comprenant une tige d'élargissement (310) côté machine guidée à l'intérieur de la broche à roder (120), laquelle peut être décalée dans le sens axial par rapport à la broche à roder au moyen d'un entraînement d'élargissement (320) et possède une portion d'extrémité (314) côté outil destinée à s'accoupler à l'élément élargisseur (330) côté outil ;
un dispositif de commande (400) destiné à commander les mouvements de travail de la broche à roder et du système élargisseur ; et
un système dynamométrique comprenant un capteur de force (500) destiné à générer un signal de capteur proportionnel à la force de pressage et une liaison de transmission servant à la transmission au dispositif de commande du signal de capteur ou d'un signal qui en est dérivé,
**caractérisée en ce**
**que** le capteur de force (500) est disposé dans la zone de la portion d'extrémité (314) côté outil de la tige d'élargissement (310) côté machine et il est relié au dispositif de commande par le biais d'une liaison de transmission télémétrique.

2. Machine à roder selon la revendication 1, **caractérisée en ce que** la liaison de transmission possède au moins une unité de transmission (520, 540) télémétrique fonctionnant sans contact, laquelle possède un premier élément de transmission (522, 542) au niveau d'un premier élément structural et un deuxième élément de transmission (524, 544) au niveau d'un deuxième élément structural séparé du premier élément structural, le premier et le deuxième élément de transmission se trouvant en contact de transmission par le biais d'un entrefer formé entre les éléments structuraux, un écart entre les éléments de transmission étant de préférence compris dans une plage au-dessous de 50 mm, notamment dans la plage entre 0,5 mm et 5 mm.

3. Machine à roder selon la revendication 1 ou 2, **caractérisée en ce que** la liaison de transmission possède une première unité de transmission (520), laquelle possède au niveau de la tige d'élargissement (310) un premier élément de transmission (522) et un deuxième élément de transmission (524) au niveau de la broche à roder ou d'un élément structural (210) relié ou pouvant être relié solidaire en rotation avec la broche à roder, le premier et le deuxième élément de transmission se trouvant en contact de transmission lors de chaque position relative de la broche à roder et de la tige d'élargissement qui se produit en fonctionnement.

4. Machine à roder selon la revendication 3, **caractérisée en ce que** la première unité de transmission possède une antenne annulaire (522) qui entoure la tige d'élargissement, dont la longueur axiale est de préférence au moins égale à une plage de positionnement axiale de la tige d'élargissement entre une position de rentrée maximale et de sortie maximale.

5. Machine à roder selon l'une des revendications 2 à 4, **caractérisée en ce que** le premier élément de transmission (522) est monté sur un premier élément structural (310) qui fait partie de la machine à roder, alors que le deuxième élément de transmission (524) est disposé sur un élément structural qui fait partie de l'arrangement d'outil de rodage (210), le deuxième élément structural étant de préférence un porte-outil (210) de l'arrangement d'outil de rodage.

6. Machine à roder selon l'une des revendications précédentes, **caractérisée en ce que** la liaison de transmission possède une deuxième unité de transmission (540), laquelle possède un premier élément de transmission (542) au niveau de la broche à roder ou d'un élément structural (210) relié ou pouvant être relié solidaire en rotation avec la broche à roder et au niveau du boîtier de broche ou d'un élément structural (135) relié ou pouvant être relié solidaire en rotation avec le boîtier de broche un deuxième élément de transmission (544), le premier et le deuxième élément de transmission se trouvant en contact de transmission lors de chaque position de rotation de la broche à roder qui se produit en fonctionnement.

7. Machine à roder selon la revendication 6, **caractérisée en ce que** l'élément structural (210) pouvant être relié solidaire en rotation avec la broche à roder est un porte-outil (210) de l'arrangement d'outil de rodage et/ou **en ce que** l'élément structural pouvant être relié solidaire en rotation avec le boîtier de broche est un chapeau de boîtier (135) qui peut être détaché du boîtier de broche (130).

8. Machine à roder selon l'une des revendications précédentes, **caractérisée en ce que** la liaison de transmission télémétrique possède au moins une unité de transmission bidirectionnelle (520, 540), laquelle est configurée pour transmettre des signaux du capteur de force (500) en direction de l'unité de commande (400) et de l'énergie pour l'alimentation électrique du capteur de force en direction du capteur de force.

9. Machine à roder selon l'une des revendications précédentes, **caractérisée en ce que** la broche à roder (120) possède un attachement d'outil (126) destiné à accueillir un porte-outil (210) de l'arrangement d'outil de rodage, la portion d'extrémité (314) de la tige d'élargissement munie du capteur de force (500) pénétrant jusque dans la zone de l'attachement d'outil de telle sorte que le capteur de force se trouve à l'intérieur du porte-outil lorsque le porte-outil est fixé à la broche à roder.
